# EUROPÄISCHE PATENTSCHRIFT

(11) **EP 1 717 923 B1**
(45) Veröffentlichungstag und Bekanntmachung des Hinweises auf die Patenterteilung: **11.05.2016**
(21) Anmeldenummer: 06006463.1
(22) Anmeldetag: 29.03.2006
(51) Int. Cl.: H02J 13/00

(54) **Haushaltgerät mit einer Steuereinrichtung und Verfahren zum Betreiben eines Haushaltgerätes**
Household appliance with control device and method for operating a household appliance
Appareil ménager avec unité de contrôle et procédé d'opération d'un appareil ménager

(30) Priorität: 29.04.2005 DE 102005020519
(43) Veröffentlichungstag der Anmeldung: 02.11.2006
(73) Patentinhaber: Miele & Cie. KG, 33332 Gütersloh (DE)
(72) Erfinder: Wendker, Christoph, 33813 Oerlinghausen (DE)
(74) Vertreter: Bauch, Uwe

(56) Entgegenhaltungen:
- EP-A- 1 263 108
- US-A1- 2002 024 332
- US-A1- 2002 138 176

## Beschreibung

Die Erfindung betrifft ein Haushaltgerät mit einer Steuereinrichtung zur Steuerung des für das Haushaltgerät bestimmten Prozesses mit vorbestimmbaren Prozessschritten, welche einen hohen Energiebedarf aufweisen, und einem Interface zum Datenaustausch zwischen Energieversorger und Steuereinrichtung, wobei die Steuereinrichtung dazu geeignet ist, über das Interface eine Zeitinformation über den innerhalb des Steuerungsprogramms benötigten Energiebedarf an den Energieversorger zu senden und über das Interface eine vom Energieversorger gesendete Quittungsinformation zu empfangen, welche den genauen Zeitraum enthält, in dem das Haushaltgerät den Prozessschritt oder die Prozessschritte mit dem hohen Energiebedarf durchführen darf. Die Erfindung betrifft außerdem ein Verfahren zum Betreiben eines Haushaltgeräts mit einer Steuereinrichtung zur Steuerung des für das Haushaltgerät bestimmten Prozesses mit vorbestimmbaren Prozessschritten, welche einen hohen Energiebedarf aufweisen, und einem Interface zum Datenaustausch zwischen Energieversorger und Steuereinrichtung, mit den Schritten:
- Senden des innerhalb des Steuerungsprogramms benötigten Energiebedarfs für einen oder mehrere energieintensive Prozessschritte mit Angabe der benötigten Leistung, des frühesten Zeitpunktes, der benötigten Dauer und des spätesten Endzeitpunktes;
- Empfangen einer Quittungsinformation vom Energieversorger, welche den genauen Zeitraum enthält, in dem das Haushaltgerät den Prozessschritt oder die Prozessschritte mit dem hohen Energiebedarf durchführen darf.

Aus der EP 1 263 108 A1 ist ein Energie Management System für Haushaltgeräte bekannt, bei dem der Energiebedarf eines Haushaltes an den Versorger gesendet wird. Hierbei wird der Bedarf in Phasen unterteilt, wobei für jede Phase die Energiemenge, Dauer und mögliche Pause zur nachfolgenden Phase genannt wird. Der Energieversorger kann anhand der Anforderungslisten sein Angebot bzw. die zu liefernde Energie bereitstellen, wobei die Beeinflussung der Energieabnahmen in den Haushalten nur innerhalb der möglichen Pausenzeiten erfolgen kann. Es ist ferner nicht gewährleistet, dass ein gestarteter Prozess, beispielsweise ein Waschprozess, das optimale Waschergebnis erreicht, wenn eine Beeinflussung des Zeitpunktes für die Energieabnahme durch den Versorger stattfindet.

Aus dem Patent DE 696 32 216 T2 ist ein Haushaltgerät mit einer Steuereinrichtung bekannt, welches über ein Interface Informationen über die verfügbare Energie erhält. Je nach voreingestellter Priorität reduziert das Haushaltgerät seine aufgenommene Leistung, wenn die Information über die verfügbare Leistung eine reduzierte Leistung vorgibt. Hierbei stehen alle Haushaltgeräte mit einer Messeinrichtung in Verbindung, die die gesamte Leistung misst. Die augenblickliche Leistung wird allen Haushaltgeräten übermittelt, wobei jedes Haushaltgerät in Abhängigkeit dieses Wertes seine eigene Leistungsaufnahme schaltet.

Aus der europäischen Patentschrift EP 0 099 043 B1 ist ein System zur Steuerung des elektrischen Energieverbrauchs in Haushalten bekannt. Hierbei ist dem Zähler eine zentrale Steuereinheit nachgeschaltet, an der beispielsweise Haushaltgeräte mit hohem Energiebedarf angeschaltet sind. In der Steuereinheit sind die Leistungsdaten bzw. Grenzwerte für den jeweiligen Energiebedarf abgespeichert, wobei die Steuereinheit zusätzlich die jeweils aktuelle Energieaufnahme durch eine Strommessung ermittelt. Unter Berücksichtung einer abgespeicherten Prioritätsfolge und des jeweils aktuellen Energiebedarfes der einzelnen Haushaltgeräte können einzelne Geräte abgeschaltet oder zu einem späteren Zeitpunkt eingeschaltet werden, so dass ein oberer Grenzwert für die aufgenommene gesamte Energie nicht überschritten wird. Die zentrale Steuereinheit erhält zusätzlich vom Energieversorger Vorgaben für verminderte Grenzwerte oder für Tagestarifänderungen, die die Steuereinheit berücksichtigt. Hierbei wird jeweils das komplette Gerät aus- oder eingeschaltet, was bei Geräten mit einer hochkomplexen Steuerung zur Gewährleistung eines Prozesses das Ergebnis negativ beeinflussen kann. Ein ähnliches System ist aus der US 2002/0024332 A1 bekannt. Hierbei werden Benutzergewohnheiten analysiert. Hierzu ist jedem Haushaltgerät eine Überwachungseinrichtung zugeordnet, die mit einer zentralen Überwachungseinrichtung informationstechnisch in Verbindung steht. Bei Überschreitung von Grenzwerten in einem der Haushaltgeräte, was zu höheren Energiekosten führen würde, wird der Benutzer vorzeitig auf diese Situation hingewiesen oder es wird ein Haushaltgerät ausgeschaltet. Hierzu wird vorab jedem Haushaltgerät eine Priorität zugeteilt. Aus der US 2002/0138176 A1 ist ein System bekannt, bei dem abhängig von der angebotenen Energie ganze Geräte ein- oder abgeschaltet werden können. Hierbei erfolgt die Datenübertragung über ein übergeordnetes Netzwerk, ein sogenanntes wide area network.

Aus der DE 100 39 134 A1 ist es ferner bekannt, dass der Haushalt bzw. Benutzer anhand von mehreren Anbietern bzw. Versorgern die jeweiligen Tarife für seinen aktuellen Energiebedarf ermittelt, und anschließend von einem einzigen Anbieter die benötigte Energie bezieht.

Es ist weiterhin üblich, dass die Energieversorger anhand von Prognosen bzw. Energiebedarfe in ihren Versorgungsgebieten die Energieerzeugung bzw. Verteilung vornehmen. Mit diesen sogenannten Tagesbedarfskurven können Energieengpässe bzw. große Überkapazitäten vermieden werden, jedoch ist eine Energieabnahme anhand des verfügbaren Energieangebotes kaum beeinflussbar.

Aus der DE 198 53 347 A1 ist es bekannt, dass Haushalte vorbestimmte Energiemengen zu geringeren Preisen beim Versorger reservieren können. Der Versorger kann die angeforderte Energie zu einem vergünstigten Preis reservieren oder nicht. Dem Verbraucher wird dies mitgeteilt, wobei es dem Verbraucher überlassen bleibt, ob er die angeforderte Energiemenge im reservierten Zeitraum abnimmt. Durch Preisvorgaben versucht der Anbieter, das Verbraucherverhalten zu beeinflussen bzw. eine genaue Prognose für den Bedarf zu erstellen. Es ist jedoch in der Regel davon auszugehen, dass die Haushalte bzw. die Benutzer von Hauhaltgeräten, insbesondere energieintensiven Haushaltgeräten, wie Waschmaschine, Wäschetrockner, Waschtrockner oder Spülmaschine den eigenen Energiebedarf über den Tagesverlauf nicht kennen bzw. über das Energieangebot des Versorgers nicht informiert sind.

Der Erfindung stellt sich somit das Problem, die Steuerung des Energiebedarfs eines Haushaltgerätes im Hinblick auf das Energieangebot eines Energieversorgers zu verbessern.

Erfindungsgemäß wird dieses Problem durch ein Haushaltgerät mit den Merkmalen des Patentanspruchs 1 oder einem Verfahren mit den Merkmalen des Anspruchs 8 gelöst. Vorteilhafte Ausgestaltungen und Weiterbildungen der Erfindung ergeben sich aus den Unteransprüchen 2 bis 7.

Der mit der Erfindung erreichbare Vorteil besteht im wesentlichen darin, dass beim Betrieb von Haushaltgeräten mit jeweils hohen Energiebedarf günstige Energieangebote des Energieversorgers berücksichtigt werden. Dies sind beispielsweise Waschmaschinen, Waschtrockner, Wäschetrockner oder Spülmaschinen. Weitere Geräte, Klima-, Wärme-, oder Warmwassergeräte sind ebenfalls denkbar. Ein weiterer Vorteil liegt darin, dass der im Haushaltgerät ablaufende Prozess das Energieangebot in der Weise berücksichtigt, dass das gewünschte Ergebnis hinsichtlich Qualität, Zeit und sonstigen Benutzervorgaben erreicht wird. Hierzu ist die Steuereinrichtung in der Lage, einen Datenaustausch mit dem Energieversorger vorzunehmen, um den für einen gestarteten Prozess vorbestimmten Energiebedarf dem Energieversorger mitzuteilen. Ein weiterer Vorteil ist, dass für die Steuerung des Energiebedarfs keine Messeinrichtungen benötigt werden, wodurch keine Installationen im Haushalt erforderlich sind.

Hierbei wird in einer ersten Anfrage der für einen energieintensiven Prozessschritt vorbestimmte bzw. benötigte Leistungswert, der früheste Startzeitpunkt und die maximale Dauer für diesen Leistungswert an den Energieversorger gesendet. Als Quittung zu dieser Anfrage sendet der Energieversorger an das anfragende Haushaltgerät einen Startzeitpunkt und eine garantierte Dauer, in der die hohe Leistung abgenommen werden darf. Als Reaktion auf die empfangene Quittung stellt die Steuereinrichtung den Prozess derart ein, dass der energieintensive Prozessschritt bzw. die energieintensiven Prozessschritte in der in der Quittungsinformation angegebenen Zeit ablaufen.

Mit dieser Einstellung bzw. zeitlichen Beeinflussung des Startzeitpunktes der energieintensiven Prozessschritte kann der Energieversorger eine Vorausschau für die zu erbringende Energielieferung erhalten. Das hat den Vorteil, dass der Energieversorger im vorhinein die Energieabnahme in seinem Sinne beeinflussen kann. Somit kann der Energieversorger die über die Quittungsinformation freigegebene Energiemenge eine über den Tagesverlauf oder anderweitig begrenzten Zeitraum nahezu gleichmäßige Energielieferung bereitstellen. Es ist zusätzlich möglich, überschüssig erzeugte Energie an die Verbraucher verkaufen zu können, ohne kostenintensive Zwischenspeicherung.

Dadurch, dass der Prozess im Haushaltgerät, mit dem Energieangebot des Energieversorgers abgestimmt ist, ist das Ergebnis des Prozesses hinsichtlich Qualität und günstigen Gesamtenergieverbrauch gewährleistet. Das ist bei Reinigungsprozessen, beispielsweise Wäschewaschen besonders wichtig, da das Temperaturverhalten der Waschflüssigkeit die Wirkung beeinflusst, wobei eine lange Verweildauer der Wäsche in der Trommel nach Beendigung des Waschprozesses (also nach dem Endschleudern) sich ungünstig auf die Knitterbildung bzw. Schonung der Wäsche auswirkt. Der Prozess bzw. ein gestarteter Prozess wird nur von der Steuerungseinrichtung bestimmt, die Energiezuteilung erfolgt quasi als ein der Steuerungseinrichtung zugeführter Parameter.

Um den Informationsaustausch zwischen Haushaltgerät bzw. Steuereinrichtung im Haushaltgerät und Energieversorger sicherzustellen, weist das Haushaltgerät ein Interface aus, welches eine Datenübertragung zwischen Steuerungseinrichtung und Datenleitung zum Energieversorger aufweist. Hierzu kann auch die Versorgungsleitung selbst zur bidirektionalen Datenübertragung mit Hilfe von aufmodullierten Signalen verwendet werden, wie dies beispielsweise bei einem bereits verwendeten Powerline-Bussystem der Fall ist. Hierzu ist es zweckmäßig, dass das Interface eine einzigartige Adresse aufweist, damit die vom Energieversorger zugeteilte Energiemenge und Zeiten nur von dem bestimmten Gerät abgenommen werden.

Um die Kommunikation zu vereinfachen ist es vorteilhaft, dass die eindeutige Adresse nur temporär während des Datenaustauschs zwischen dem Haushaltgerät und dem Energieversorger in das Interface eingetragen ist. Das bedeutet, dass innerhalb eines Versorgungsbereichs die einzelnen Haushaltgeräte ihre Anforderung an einen Energiebedarf nur dann an den Energieversorger senden können, wenn kein Datenaustausch oder Kommunikation zwischen einem anderen Haushaltgerät und dem Energieversorger erfolgt.

Um eine für das Energiemanagement ausreichende Information über den Energiebedarf zu erhalten, ist es zweckmäßig, dass die vom Haushaltgerät gesendete Anforderung des Energiebedarfs bzw. des zukünftigen Energiebedarfs eine Information über die benötigte Leistung, den frühesten Startzeitpunkt und die Dauer für den energieintensiven Prozessschritt umfasst. Hier sei beispielhaft ein Ablauf für ein Waschprogramm für Kochwäsche in einer Waschmaschine genannt, welches als energieintensiven Prozessschritt die Aufheizphase mit einer Leistung von 2 KW für eine Dauer von 20 min enthält. Die Steuerungseinrichtung kennt aufgrund des eingestellten Programms und der bekannten Laufzeiten für die Prozessschritte vor dem Aufheizen, beispielsweise 20 min, den frühesten Startzeitpunkt, in dem der energieintensive Prozessschritt "Aufheizen" starten kann. Somit sendet sie die Information "Leistung = 2 KW", frühesten Startzeitpunkt = + 20 min", Dauer = 20 min" an den Energieversorger. Der Energieversorger sendet beispielsweise Leistung 2 KW, Startzeitpunkt = +60 min, Dauer = 20 min" an die Steuerungseinrichtung der anfordernden Waschmaschine zurück, wodurch diese ihren Prozess so ablaufen lässt, dass das Aufheizen erst nach 60 min gestartet wird.

Es kann in einigen Fällen zweckmäßig sein, die vom Energieversorger zugeteilte Zeit bzw. zugeteilten Startzeitpunkt für den energieintensiven Prozessschritt nicht zu akzeptieren. Dies kann der Fall sein, wenn der vom Energieversorger zugeteilte Startzeitpunkt eine lange Wartezeit mit einer unerwünschten Verspätung für das Ende des gesamten Prozesses führen würde. In diesem Fall werden die durch die Steuerungseinrichtung festgelegten Parameter (Leistung, Startzeitpunkt und Dauer) an den Energieversorger gesendet, damit dieser seine Prognose für den Gesamtenergiebedarf eines Versorgungsgebietes entsprechend korrigieren kann.

In einer zweckmäßigen Ausführung enthält das Haushaltgerät Eingabemittel, wie beispielsweise Drehschalter, und/oder Taster, zur Einstellung der gewünschten Ergebnisse des Prozesses. Hierbei kann der Benutzer zumindest den frühesten Startzeitpunkt, die gewünschte Dauer und den spätesten Endzeitpunkt vorgeben. Die einstellbaren Vorgaben können auch auf den gewünschten Endzeitpunkt eingeschränkt werden, so dass die Steuerungseinrichtung die Berechnung des frühesten Startzeitpunktes und die Dauer für den energieintensiven Prozessschritt selbst durchführt. Als weitere alternative Einstellung ist eine stufige Auswahl möglich, wobei dem Benutzer die Möglichkeiten für ein schnelles Prozessergebnis oder dass der Prozessablauf und damit der Zeitpunkt des Prozessergebnisses selbstständig von der Steuerungseinrichtung in Abhängigkeit von einem günstigen Energieangebot oder von der Energiezuweisung des Energieversorgers angeboten werden.

Im Falle, dass der Benutzer die Einstellungen ändert, nachdem der Energieversorger den angeforderten Energiebedarf bereits quittiert hatte, ist es vorteilhaft, dass der durch die neue Benutzereinstellung geänderte Energiebedarf an den Energieversorger mitgeteilt wird. Hierzu muss die Steuereinrichtung die bereits zugewiesenen Leistung, Startzeitpunkt und Dauer als Freigabeinformation, beispielsweise mit einer Kennung zur Energiefreigabe, an den Energieversorger senden. In diesem Falle ist keine Quittierung des Energieversorgers notwendig.

In einer zweckmäßigen Ausführung ist jedem Haushalt ein zentrales Interface zur Datenübertragung mit dem Energieversorger vorgesehen. Dieses Interface dient zur Entkopplung der Datenübertragung zwischen der Datenübertagung innerhalb eines Haushalts und der Datenübertragung zwischen Haushalt und Energieversorger. Dies dient zur Verminderung des Datenaufkommens im Netz eines Versorgungsgebietes. Das Interface hat in einer vorteilhaften Ausführungsform einen Energie-Management-Block, der die Energieanforderungen mehrerer Haushaltgeräte empfängt und über eine Berechnung zur Ermittlung der Vereinigungsmenge des Energiebedarfs eine zusammengefasste Energieanforderung mit Leistungsinformation, Zeitinformation und eine Information der benötigten Dauer an den Energieversorger sendet. Nach Erhalt der Quittungsinformation weist der lokale Energie-Management-Block die einzelnen Energiemengen den anfordernden Haushaltgeräten bzw. den Steuerungseinrichtungen der Haushaltgeräte zu.

Ein Ausführungsbeispiel der Erfindung ist in den Zeichnungen rein schematisch dargestellt und wird nachfolgend näher beschrieben. Es zeigt
- Fig. 1: ein Versorgungsnetz mit angeschlossenen Haushaltgeräten;
- Fig. 2a bis 2c: beispielhaft den Ablauf der Anfrage und der Zuweisung des Energiebedarfs.

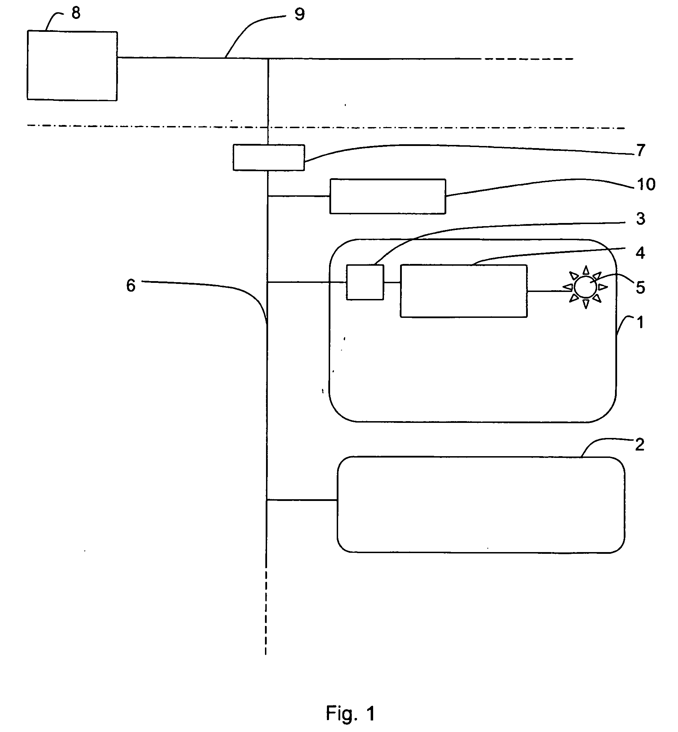

Wie in Fig. 1 dargestellt, sind am Versorgungsnetz 6 in einem Haushalt die Haushaltgeräte 1 und 2 angeschlossen. Als Beispiel sei hier für das Haushaltgerät 1 eine Waschmaschine genannt. Die Waschmaschine 1 enthält neben den nicht näher dargestellten Komponenten zur Durchführung des Waschprozesses ein Interface 3, eine Steuerungseinrichtung 4 und Eingabemittel 5. Über ein Interface 3 ist eine bidirektionale Datenübertragung zwischen der Steuerungseinrichtung 4 und dem Netz 6 vorgesehen. Die Datensignale sind beispielsweise auf die Versorgungsleitung 6 aufmoduliert, wie es bereits aus dem Power-Line-Bussystem bekannt ist. Diese Art der Datenübertagung kann jedoch durch andere Datenübertragungsarten erfolgen, beispielsweise über eine separate Leitung, Funk, Lichtleiter, Infrarot etc. Die Datenübertragung ist so ausgelegt, dass sie über den Zähler 7 hinweg über das öffentliche Netz 9 mit dem Energieversorger 8 erfolgt.

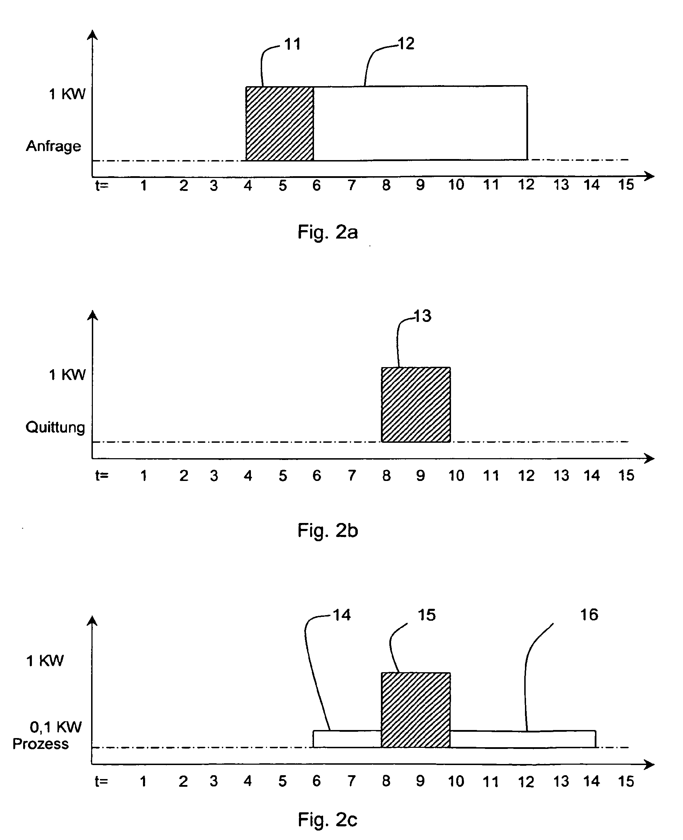

In den Figuren 2a bis 2c wird anhand des vorliegenden Beispiels zum Betrieb einer Waschmaschine 1 der Ablauf der Energiezuweisung durch den Energieversorger erläutert. In diesem Beispiel wird ein Waschprogramm eingestellt, das ab Startzeitpunkt t=1 ab dem Zeitpunkt t=4 den Energiebedarf 11 hat, was einer Leistung von 1 KW für die Dauer von zwei Zeiteinheiten entspricht. Das späteste Ende darf den Zeitpunkt t=12 nicht überschreiten. Somit kann der angeforderte Energiebedarf 11 innerhalb des Zeitfensters 12, welches sich im Zeitraum zwischen t=4 und t=12 erstreckt, platziert werden bzw. genutzt werden. Als energieintensiver Prozessschritt 11 ist beim Betrieb einer Waschmaschine das Aufheizen der Waschflüssigkeit anzusehen. In Fig. 2a ist der anzufordernde bzw. der angeforderte Energiebedarf 11, der Startzeitpunkt t=4, die Dauer t=+2, und der späteste Endzeitpunkt t=12 in einem Zeitdiagramm dargestellt. Diese Informationen werden an den Energieversorger 8 gesendet. Der Energieversorger 8 gleicht diese Bedarfsanforderung mit seinem Energieangebot bzw. mit seiner Prognose ab und sendet der Steuerungseinrichtung 4 als Quittungsinformation (Fig. 2b), dass sie zum Zeitpunkt t=8 bis t=10 die Energie 13 abnehmen darf. Dies entspricht der angeforderten Energiemenge 11, beispielsweise 1KW x 2 Zeiteinheiten. In Fig. 2c ist die Reaktion der Steuerungseinheit bzw. der Waschmaschine auf die Quittungsinformation 13 dargestellt. Zum Zeitpunkt t=6 wird der Waschprozess gestartet, wobei in der ersten Phase vom Zeitpunkt t=6 bis t=8 der Wassereinlauf mit Trommelantrieb ein oder mehrere Prozessschritte 14 mit geringem Energiebedarf durchgeführt werden. Ab dem Zeitpunkt t=8 wird das Aufheizen und somit der energieintensive Prozessschritt 15 gestartet, der im wesentlichen die angeforderte und über die Quittierung durch den Energieversorger 8 freigegebene Energiemenge 15 benötigt bzw. verbraucht. Nach zwei Zeiteinheiten, also zum Zeitpunkt t=10 wird das Aufheizen 15 beendet und die weiteren Prozessschritte 16, wie Wäsche bewegen, Abpumpen, Spülen und Endschleudern bis zum Zeitpunkt t=14 durchgeführt. Diese Prozessschritte 16 benötigen in diesem Beispiel nur maximal 0,1 KW, so dass für diese kein Energiemanagement in der oben beschriebenen Weise notwendig ist. Das Waschprogramm bzw. der gesamte Prozess ist zum Zeitpunkt t=14 beendet.

Als Zeiteinheit können Absolutzeiten in Std., Min. und Sek. verwendet werden, es sind jedoch auch abstrakte Zeitkodierungen oder feste Zeitraste von beispielsweise 10 min. oder 30 min. denkbar, um die Datenmenge für die Datenübertragung zu reduzieren.

## Patentansprüche

1. Haushaltgerät (1, 2) mit einer Steuereinrichtung (4) zur Steuerung des für das Haushaltgerät bestimmten Prozesses mit vorbestimmbaren Prozessschritten (11), welche einen hohen Energiebedarf aufweisen, und einem Interface (3) zum bidirektionalen Datenaustausch zwischen Energieversorger (8) und Steuereinrichtung (4), wobei die Steuereinrichtung (4) dazu geeignet ist, über das Interface eine Zeitinformation über den innerhalb des Prozesses benötigten Energiebedarfs, umfassend den Startzeitpunkt, die Dauer und die Leistung, an den Energieversorger zu senden und über das Interface (3) eine vom Energieversorger (8) gesendete Quittungsinformation (13) zu empfangen, welche den genauen Startzeitpunkt und eine garantierte Dauer enthält, in dem das Haushaltgerät (1, 2) den Prozessschritt oder die Prozessschritte (11) mit dem hohen Energiebedarf durchführen darf,
**dadurch gekennzeichnet,**
**dass** der Prozess durch die Steuereinrichtung (4) derart einstellbar ist, dass der energieintensive Prozessschritt bzw. die energieintensiven Prozessschritte (11) in der in der Quittungsinformation (13) angegebenen Zeit abläuft bzw. ablaufen und der ablaufende Prozess das Energieangebot in der Weise berücksichtigt, dass das gewünschte Ergebnis hinsichtlich Qualität, Zeit und sonstigen Benutzervorgaben erreicht wird sowie, dass für die Prozessschritte (14, 16) mit geringem Energiebedarf kein Energiemanagement in der oben beschriebenen Weise erfolgt.

2. Haushaltgerät mit einer Steuereinrichtung nach Anspruch 1,
**dadurch gekennzeichnet,**
**dass** das Interface eine im Versorgungsbereich des Energieversorgers einzigartige Adresse aufweist.

3. Haushaltgerät mit einer Steuereinrichtung nach Anspruch 2,
**dadurch gekennzeichnet,**
**dass** das Interface eine im Versorgungsbereich des Energieversorgers im Zeitraum des Datenaustauschs mit dem Energieversorger eine einzigartige Adresse aufweist, wobei der Datenaustausch zumindest die Anforderung des Energiebedarfs für das Haushaltgerät und die Quittungsinformation des Energieversorgers umfasst.

4. Haushaltgerät nach mindestens einem der Ansprüche 1 bis 3,
**dadurch gekennzeichnet,**
**dass** die Anforderung des Energiebedarfs eine Information über die benötigte Leistung, einen frühesten Startzeitpunkt und eine Dauer für die voraussichtlich benötigte Leistung umfasst.

5. Haushaltgerät nach Anspruch 1,
**dadurch gekennzeichnet,**
**dass** die Steuerungseinrichtung Eingabemittel zur Eingabe von Benutzereinstellungen der gewünschten Ergebnisse des Prozesses aufweist.

6. Haushaltgerät nach Anspruch 5,
**dadurch gekennzeichnet,**
**dass** durch die Eingabemittel der Startzeitpunkt, die Dauer des Prozesses und der späteste Endzeitpunkt des Prozesses vorgebbar ist.

7. Haushaltgerät nach Anspruch 5,
**dadurch gekennzeichnet,**
**dass** durch die Eingabemittel ein schnelles Prozessergebnis vorgebbar ist.

8. Haushaltgerät nach Anspruch 5,
**dadurch gekennzeichnet,**
**dass** durch das Eingabemittel der Prozessablauf derart vorgebbar ist, dass der Zeitpunkt des Prozessergebnisses selbständig von der Steuereinrichtung in Abhängigkeit von der Energiezuweisung anbietbar ist.

9. Verfahren zum Betreiben eines Haushaltgeräts (1, 2) mit einer Steuereinrichtung (4) zur Steuerung des für das Haushaltgerät (1, 2) bestimmten Prozesses mit vorbestimmbaren Prozessschritten (11), welche einen hohen Energiebedarf aufweisen, und einem Interface (3) zum bidirektionalen Datenaustausch zwischen Energieversorger (8) und Steuereinrichtung (4), mit den Schritten:
- Senden des innerhalb des Prozesses benötigten Energiebedarfs für einen oder mehrere energieintensive Prozessschritte (11) mit Angabe der benötigten Leistung, des frühesten Zeitpunktes, der benötigten Dauer und des spätesten Endzeitpunktes;
- Empfangen einer Quittungsinformation (13) vom Energieversorger (8), welche Startzeitpunkt und eine garantierte Dauer enthält, in dem das Haushaltgerät (1, 2) den Prozessschritt oder die Prozessschritte (11) mit dem hohen Energiebedarf durchführen darf,
**gekennzeichnet durch**
Einstellen des Prozesses als Reaktion auf die empfangene Quittung (13) derart, dass der energieintensive Prozessschritt bzw. die energieintensiven Prozessschritte (11) in der in der Quittungsinformation (13) angegebenen Zeit abläuft bzw. ablaufen und der ablaufende Prozess das Energieangebot in der Weise berücksichtigt, dass das gewünschte Ergebnis hinsichtlich Qualität, Zeit und sonstigen Benutzervorgaben erreicht wird sowie, dass für die Prozessschritte (14, 16) mit geringem Energiebedarf kein Energiemanagement in der oben beschriebenen Weise erfolgt.

10. Verfahren zum Betreiben eines Haushaltgeräts nach Anspruch 9
**dadurch gekennzeichnet,**
**dass** die Steuerungseinrichtung des Haushaltgerätes nach Erhalt der Quittungsinformation als Energiebedarf eine Information über die benötigte Leistung, den durch die Steuereinrichtung vorbestimmten Startzeitpunkt und die durch die Steuereinrichtung vorbestimmte Dauer für die benötigte Leistung an den Energieversorger sendet.

11. Verfahren zum Betreiben eines Haushaltgeräts nach Anspruch 9 oder 10,
**dadurch gekennzeichnet,**
**dass** die Steuerungseinrichtung nach einer Änderung des bereits vom Energieversorger quittierten Energiebedarfs oder zum Energieversorger gesendeten vorbestimmten Energiebedarf den nun geänderten Energiebedarf an den Energieversorger sendet.

## Claims

1. Domestic appliance (1, 2) comprising a control device (4) for controlling the process intended for the domestic appliance, which process has predeterminable process steps (11) having a high energy demand, and comprising an interface (3) for bi-directional data exchange between an energy supplier (8) and the control device (4), the control device (4) being suitable for transmitting, via the interface, to the energy supplier a piece of time information about the energy demand required in the process, said information comprising the start time, the duration and the power, and being suitable for receiving, via the interface (3), a piece of acknowledgement information (13) that is transmitted by the energy supplier (8) and contains the exact start time and a guaranteed duration in which the domestic appliance (1, 2) is allowed to carry out the process step or the process steps (11) having the high energy demand,
**characterised in that**
the process can be set by means of the control device (4) such that the energy-intensive process step or the energy-intensive process steps (11) run in the time specified in the acknowledgement information (13) and the running process takes into account the available power in such a way that the desired result in terms of quality, time and other user settings is achieved, and that energy management does not take place in the above-described manner for the process steps (14, 16) having low energy demand.

2. Domestic appliance comprising a control device according to claim 1,
**characterised in that**
the interface has an address that is unique within the service area of the energy supplier.

3. Domestic appliance comprising a control device according to claim 2,
**characterised in that**
the interface has an address that is unique within the service area of the energy supplier in the period of time for the data exchange with the energy supplier, the data exchange including at least the request for the energy demand of the domestic appliance and the acknowledgement information from the energy supplier.

4. Domestic appliance according to at least one of claims 1 to 3,
**characterised in that**
the request for the energy demand includes a piece of information about the required power, an earliest start time, and a duration for the power that is expected to be required.

5. Domestic appliance according to claim 1,
**characterised in that**
the control device comprises input means for inputting user settings for the desired results of the process.

6. Domestic appliance according to claim 5,
**characterised in that**
the start time, the duration of the process and the latest end time of the process can be pre-set using the input means.

7. Domestic appliance according to claim 5,
**characterised in that**
a rapid process result can be pre-set using the input means.

8. Domestic appliance according to claim 5,
**characterised in that**
the process sequence can be pre-set using the input means such that the time of the process result can be provided independently of the control device, depending on the allocation of power.

9. Method for operating a domestic appliance (1, 2) comprising a control device (4) for controlling the process intended for the domestic appliance (1, 2), which process has predeterminable process steps (11) having a high energy demand, and comprising an interface (3) for bi-directional data exchange between the energy supplier (8) and the control device (4), said method comprising the steps of:
- transmitting the energy demand required in the process for one or more energy-intensive process steps (11) together with information about the required power, the earliest time, the required duration and the latest end time;
- receiving a piece of acknowledgement information (13) from the energy supplier (8), which information contains the start time and a guaranteed duration in which the domestic appliance (1, 2) is allowed to carry out the process step or the process steps (11) having the high energy demand,
**characterised by**
setting the process in response to the received acknowledgement (13) such that the energy-intensive process step or the energy-intensive process steps (11) run in the time specified in the acknowledgement information (13) and the running process takes into account the available power in such a way that the desired result in terms of quality, time, and other user settings is achieved, and that power management does not take place in the above-described manner for process steps (14, 16) having low energy demand.

10. Method for operating a domestic appliance according to claim 9,
**characterised in that**,
after receiving the acknowledgement information, the control device of the domestic appliance transmits to the energy supplier as energy demand a piece of information about the required power, the start time predetermined by the control device, and the duration, predetermined by the control device, for the required power.

11. Method for operating a domestic appliance according to either claim 9 or claim 10,
**characterised in that**,
after a change has been made to the energy demand that is already acknowledged by the energy supplier or predetermined energy demand transmitted to the energy supplier, the control device transmits the now-changed energy demand to the energy supplier.

## Revendications

1. Appareil électroménager (1, 2) avec un dispositif de commande (4) pour la commande du processus destiné à l'appareil électroménager avec des étapes de processus (11) pouvant être prédéfinies qui présentent un besoin en énergie élevé, et avec une interface (3) pour l'échange de données bidirectionnel entre un fournisseur d'énergie (8) et le dispositif de commande (4), dans lequel le dispositif de commande (4) est adapté pour envoyer au fournisseur d'énergie, via l'interface, une information temporelle portant sur le besoin en énergie nécessaire à l'intérieur du processus, comprenant l'instant de démarrage, la durée et la puissance, et pour recevoir via l'interface (3) une information d'acquittement (13) envoyée par le fournisseur d'énergie (8) qui contient l'instant de démarrage précis et une durée garantie pendant laquelle l'appareil électroménager (1, 2) est autorisé à effectuer l'étape de processus ou les étapes de processus (11) avec le besoin en énergie élevé,
**caractérisé en ce que**
le processus peut être réglé par le dispositif de commande (4) de telle sorte que l'étape de processus à forte intensité énergétique ou respectivement les étapes de processus (11) à forte intensité énergétique se déroule ou se déroulent dans le temps indiqué dans l'information d'acquittement (13), et le processus en cours prend en compte l'offre en énergie de telle manière que le résultat souhaité en matière de qualité, de temps et d'autres paramètres d'utilisateur est atteint, et de telle manière que, pour les étapes de processus (14, 16) avec un faible besoin en énergie, aucune gestion de l'énergie n'intervient de la façon décrite plus haut.

2. Appareil électroménager avec un dispositif de commande selon la revendication 1,
**caractérisé en ce que**
l'interface présente une adresse unique dans la zone de couverture du fournisseur d'énergie.

3. Appareil électroménager avec un dispositif de commande selon la revendication 2,
**caractérisé en ce que**
l'interface présente une adresse unique dans la zone de couverture du fournisseur d'énergie pendant la période de l'échange de données avec le fournisseur d'énergie, dans lequel l'échange de données comprend au moins l'exigence du besoin en énergie pour l'appareil électroménager et l'information d'acquittement du fournisseur d'énergie.

4. Appareil électroménager selon au moins une des revendications 1 à 3,
**caractérisé en ce que**
l'exigence du besoin en énergie comprend une information sur la puissance nécessaire, un instant de démarrage le plus précoce et une durée pour la puissance nécessaire prévisible.

5. Appareil électroménager selon la revendication 1,
**caractérisé en ce que**
le dispositif de commande présente des moyens d'entrée pour l'entrée de réglages d'utilisateur concernant les résultats souhaités du processus.

6. Appareil électroménager selon la revendication 5,
**caractérisé en ce que** l'instant de démarrage, la durée du processus et l'instant de fin le plus tardif du processus peuvent être paramétrés par les moyens d'entrée.

7. Appareil électroménager selon la revendication 5,
**caractérisé en ce**
**qu'**un résultat de processus rapide peut être paramétré par les moyens d'entrée.

8. Appareil électroménager selon la revendication 5,
**caractérisé en ce que** le déroulement du processus peut être paramétré par les moyens d'entrée de telle sorte que l'instant du résultat de processus peut être proposé automatiquement par le dispositif de commande en fonction de l'affectation d'énergie.

9. Procédé de fonctionnement d'un appareil électroménager (1, 2) avec un dispositif de commande (4) pour la commande du processus destiné à l'appareil électroménager (1, 2) avec des étapes de processus (11) pouvant être prédéfinies qui présentent un besoin en énergie élevé, et avec une interface (3) pour l'échange de données bidirectionnel entre un fournisseur d'énergie (8) et le dispositif de commande (4),
avec les étapes suivantes :
- envoi du besoin en énergie nécessaire à l'intérieur du processus pour une ou plusieurs étapes de processus (11) à forte intensité énergétique avec indication de la puissance nécessaire, de l'instant le plus précoce, de la durée nécessaire et de l'instant de fin le plus tardif ;
- réception d'une information d'acquittement (13) du fournisseur d'énergie (8) qui contient l'instant de démarrage et une durée garantie pendant laquelle l'appareil électroménager (1, 2) est autorisé à effectuer l'étape de processus ou les étapes de processus (11) avec le besoin d'énergie élevé,
**caractérisé par**
le réglage du processus en réaction à l'acquittement (13) reçu de telle sorte que l'étape de processus à forte intensité énergétique ou respectivement les étapes de processus (11) à forte intensité énergétique se déroule ou se déroulent dans le temps indiqué dans l'information d'acquittement (13), et le processus en cours prend en compte l'offre en énergie de telle manière que le résultat souhaité en matière de qualité, de temps et d'autres paramètres d'utilisateur est atteint, et de telle manière que, pour les étapes de processus (14, 16) avec un faible besoin en énergie, aucune gestion de l'énergie n'intervient de la façon décrite plus haut.

10. Procédé de fonctionnement d'un appareil électroménager selon la revendication 9,
**caractérisé en ce que**
le dispositif de commande de l'appareil électroménager, après la réception de l'information d'acquittement en tant que besoin d'énergie, envoie au fournisseur d'énergie une information sur la puissance nécessaire, l'instant de démarrage prédéfini par le dispositif de commande et la durée prédéfinie par le dispositif de commande pour la puissance nécessaire.

11. Procédé de fonctionnement d'un appareil électroménager selon la revendication 9 ou 10,
**caractérisé en ce que** le dispositif de commande, après une modification du besoin d'énergie déjà acquitté par le fournisseur d'énergie ou du besoin d'énergie prédéfini envoyé au fournisseur d'énergie, envoie au fournisseur d'énergie le besoin d'énergie désormais modifié.
